# EUROPÄISCHE PATENTSCHRIFT

(11) **EP 1 206 185 B1**
(45) Veröffentlichungstag und Bekanntmachung des Hinweises auf die Patenterteilung: **18.02.2004**
(21) Anmeldenummer: 00956257.0
(22) Anmeldetag: 22.07.2000
(51) Int. Cl.: A01N 43/54

(54) **KOMBINATIONEN AUS HERBIZIDEN UND SAFENERN**
COMBINATIONS CONSISTING OF HERBICIDES AND SAFENERS
COMBINAISON D'HERBICIDES ET DE PHYTOPROTECTEURS

(30) Priorität: 03.08.1999 DE 19936438
(43) Veröffentlichungstag der Anmeldung: 22.05.2002
(73) Patentinhaber: Bayer CropScience GmbH, 65929 Frankfurt/Main (DE)
(72) Erfinder: BIERINGER, Hermann, D-65817 Eppstein (DE); WILLMS, Lothar, D-65719 Hofheim (DE); ZIEMER, Frank, D-65830 Kriftel (DE); HACKER, Erwin, D-65239 Hochheim (DE)
(86) Internationale Anmeldenummer: PCT/EP2000/007050
(87) Internationale Veröffentlichungsnummer: WO 2001/008487

(56) Entgegenhaltungen:
- DE-A- 4 431 219
- DE-A- 4 432 888
- DE-A- 4 437 197
- DE-A- 19 506 202

## Beschreibung

Die Erfindung betrifft das technische Gebiet der Pflanzenschutzmittel, insbesondere Herbizid-Antidot-Kombinationen (Wirkstoff-Safener-Kombinationen), die hervorragend für den Einsatz gegen konkurrierende Schadpflanzen in Nutzpflanzenkulturen geeignet sind.

Aus EP-A 436 680 sind herbizide Wirkstoffe bekannt, die ein breites Spektrum von Unkräutern bekämpfen und allein oder in Mischung mit anderen Wirkstoffen von wichtigen Unkräutern eingesetzt werden können, wobei sowohl der sogenannte nicht-selektive Einsatz gemeinsam mit nicht-selektiven Blattherbiziden beschrieben ist, als auch selektive Einsatzmöglichkeiten in Kulturen, die durch gentechnische Methoden tolerant gegenüber solchen Wirkstoffen gemacht wurden, erwähnt werden.

Jedoch sind viele dieser Wirkstoffe nicht voll verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen nicht oder nur in so geringen Aufwandmengen eingesetzt werden, daß die erwünschte breite herbizide Wirksamkeit gegenüber Schadpflanzen nicht gewährleistet ist. Speziell können viele der genannten Herbizide nicht ausreichend selektiv gegen Schadpflanzen in Mais, Reis, Getreide oder einigen anderen Kulturen eingesetzt werden.

Zur Überwindung dieser Nachteile ist es bekannt, herbizide Wirkstoffe in Kombination mit einem sogenannten Safener oder Antidot einzusetzen. Ein Safener im Sinne der Erfindung ist eine Verbindung oder ein Gemisch von Verbindungen, das die phytotoxischen Eigenschaften eines Herbizides gegenüber Nutzpflanzen aufhebt oder verringert, ohne daß die herbizide Wirkung gegenüber Schadpflanzen wesentlich vermindert wird.

Die Auffindung eines Safeners für eine bestimmte Klasse von Herbiziden ist nach wie vor eine schwierige Aufgabe, da die genauen Mechanismen, durch die ein Safener die Schadwirkung von Herbiziden verringert, nicht bekannt sind. Die Tatsache, daß eine Verbindung in Kombination mit einem bestimmten Herbizid als Safener wirkt, läßt daher keine Rückschlüsse darauf zu, ob eine solche Verbindung auch mit anderen Herbizidklassen Safenerwirkung aufweist. So hat sich bei der Anwendung von Safenem zum Schutz der Nutzpflanzen vor Herbizidschädigungen gezeigt, daß die Safener in vielen Fällen immer noch gewisse Nachteile aufweisen können. Dazu zählen:
- der Safener vermindert die Wirkung der Herbizide gegen die Schadpflanzen,
- die nutzpflanzenschützenden Eigenschaften sind nicht ausreichend,
- in Kombination mit einem gegebenen Herbizid ist das Spektrum der Nutzpflanzen, in denen der Safener/Herbizid-Einsatz erfolgen soll, nicht ausreichend groß,
- ein gegebener Safener ist nicht mit einer ausreichend großen Anzahl von Herbiziden kombinierbar.

Aus DE 19506202, DE 4437197, DE 4432888 und DE 4431219 sind herbizide Mittel bekannt, die ein Phenyluracil und einen oder mehr spezielle Safener enthalten.

Aufgabe der vorliegenden Erfindung war es, herbizide Mittel zu finden, in welchen die Selektivität der oben genannten Herbizide gegenüber wichtigen Kulturpflanzen erhöht ist. Diese Aufgabe wird überraschend gelöst durch die herbiziden Mittel der vorliegenden Erfindung.

Gegenstand der Erfindung ist daher ein herbizid wirksames Mittel, enthaltend eine Mischung aus
(A) einer herbizid wirksamen Menge an einer oder mehreren Verbindungen der Formel (I) 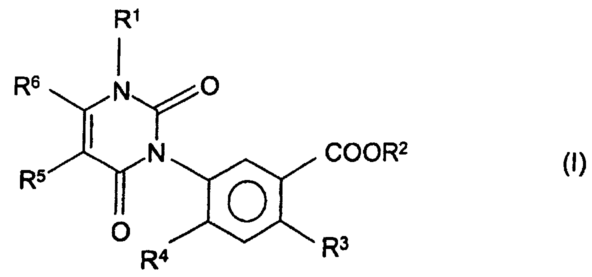 , worin
   - R¹: Wasserstoff, C₁-C₄-Alkyl, C₃-C₄-Alkenyl, C₃-C₄-Alkinyl oder C₁-C₄-Haloalkyl,
   - R²: Wasserstoff, C₁-C₁₀-Alkyl, C₁-C₁₀-Haroalkyl, C₆-C₁₀-Aryl, C₆-C₁₀-Haloaryl, C₁-C₆-Alkylsulfonyl-C₁-C₄-Alkyl, di(C₁-C₆-alkyl)phosphono-C₁-C₄-alkyl, tri(C₁-C₆-alkyl)silyl-C₁-C₄-alkyl), C₂-C₇-alkanoyl-C₁-C₄-alkyl, carboxy-C₁-C₄-alkyl, (C₁-C₆-alkoxy)carbonyl-C₁-C₄-alkyl, {[C₃-C₉(α-alkylalkylidene)]iminooxy-(C₁-C₆-alkoxy)carbonyl}-C₁-C₄-alkyl, (C₃-C₆-alkenyloxy)carbonyl-C₁-C₄-alkyl, (C₃-C₆-alkynyloxy)carbonyl-C₁-C₄-alkyl, (C₃-C₈-cycloalkyloxy)carbonyl-C₁-C₄-alkyl, phenoxy-C₁-C₄-alkyl, C₃-C₆-alkenyloxy-C₁-C₄-alkyl, C₃-C₈-cycloalkenyloxy-C₁-C₄-alkyl, C₅-C₈-cycloalkenyl, C₆-C₈-bicycloalkyl, C₆-C₈-bicycloalkenyl, C₂-C₇-cyanoalkyl oder C₃-C₆-alkynyloxy-C₁-C₄-alkyl,
   - R³: Wasserstoff, Halogen oder Cyano,
   - R⁴: Wasserstoff oder Halogen,
   - R⁵: Wasserstoff, Halogen oder C₁-C₄-alkyl, und
   - R⁶: C₁-C₄-alkyl oder C₁-C₄-Haloalkyl ist, oder R⁵ und R⁶ bilden zusammen Trimethylen oder Tetramethylen,
   und die korrespondierenden Enol-Ether der Verbindung der Formel (I), worin R¹ verschieden von Wasserstoff und C₁-C₄-Haloalkyl ist sowie die Salze der Verbindung der Formel (I) worin R¹ Wasserstoff ist,
   und
(B) einer antidotisch wirksamen Menge an einem oder mehreren Safenern, ausgewählt aus der Gruppe bestehend aus Verbindungen der Formel (II) oder (III).

### Beispiele für Reste R² sind:

Acetylmethyl, 2-acetylethyl, propionylmethyl, cyanomethyl, trimethylsilylmethyl, 2-(trimethylsilyl)-ethyl, 2-(methylsulfonyl)-ethyl, methoxycarbonyl-methyl, ethoxycarbonylmethyl, 1-(methoxycarbonyl)-ethyl, 1-(ethoxycarbonyl)-ethyl, 1-(ethoxycarbonyl)-1-methylethyl, 2-(ethoxycarbonyl)-1-methylethyl, 1-(allyloxycarbonyl)-1-methylethyl, isopropyl, 2-phenoxyethyl, 2-cyclohexenyl, 2-cyanoethyl, 2-norbomanyl, 5-norbomen-2-yl, 2-allyloxyethyl und 2-Propargyloxyethyl.

Wenn R¹ gleich C₃-C₄-Alkenyl, C₃-C₄-Alkinyl oder C₁-C₄-Haloalkyl ist, sind Allyl, Propargyl und Difluoromethyl jeweils bevorzugt. Wenn R⁶ C₁-C₄-Haloalkyl ist, sind Trifluormethyl und Pentafluorethyl bevorzugt.

Eine bevorzugte Gruppe von Verbindungen der Formel (I) sind solche, worin R² verschieden von Carboxy-C₁-C₄-Alkyl ist, R⁵ Wasserstoff, Fluor oder C₁-C₄-Alkyl ist und R⁶ C₁-C₄-Alkyl oder C₁-C₄-Haloalkyl ist sowie deren Enol-Ether und Salze.

Bevorzugt sind ebenfalls Verbindungen der Formel (I) worin
- R¹: C₁-C₄-alkyl, bevorzugt Methyl,
- R²: C₂-C₇-alkanoyl-C₁-C₄-alkyl, (C₁-C₆-alkoxy)carbonyl-C₁-C₄-alkyl, C₁-C₄-Alkyl, {[C₃-C₉-(α-alkylalkylidene)iminooxy-(C₁-C₆-alkoxy)carbonyl]-C₁-C₄-alkyl, (C₃-C₆-alkenyloxy)-carbonyl-C₁-C₄-alkyl, (C₃-C₆-alkynyloxy)carbonyl-C₁-C₄-alkyl oder (C₃-C₈-cycloalkyloxy)carbonyl-C₁-C₄-alkyl,
- R³: Halogen, bevorzugt Chlor oder Brom, oder Cyano, vorzugsweise Chlor,
- R⁴: Wasserstoff oder Fluor, vorzugsweise Wasserstoff,
- R⁵: Wasserstoff, Fluor oder Methyl, vorzugsweise Wasserstoff und
- R⁶: Methyl, Trifluormethyl oder Pentafluorethyl vorzugsweise Trifluormethyl ist.

### Bevorzugte Verbindungen der Formel (I) sind:

Ethyl 2-{2-chloro-5-[3,6-dihydro-3,4-dimethyl-2,6-dioxo-1(2H)-pyrimidinyl]-4-fluorobenzoyloxy}-2-methylpropionat,
Methyl 2-{2-chloro-5-[3,6-dihydro-3,4-dimethyl-2,6-dioxo-1(2H)-pyrimidinyl]-4-fluorobenzoyloxy}-2-methyl]propionat,
tert.butyl 2-{2-chloro-5-[3,6-dihydro-3,4-dimethyl-2,6-dioxo-1-(2H)-pyrimidinyl]-4-fluorobenzoyloxy}-2-methyl-propionat,
Ethyl 2-ethyl-2-{2-chloro-5-[3,6-dihydro-3,4-dimethyl-2,6-dioxo-1(2H)-pyrimidinyl]-4-fluorobenzoyloxy}-propionat,
Methyl 2-{2-chloro-5-[3,6-dihydro-2,6-dioxo-3-methyl-4-trifluoromethyl-1(2H)-pyrimidinyl]-benzoyloxy}2-methyl-propionat,
Isopropyl 2-{2-chloro-5-[3,6-dihydro-2,6-dioxo-3-methyl-4-trifluoromethyl-1(2H)-pyrimidinyl]-benzoyloxy)-propionat,
Ethyl 2-ethyl-2-{2-chloro-5-[3,6-dihydro-2,6-dioxo-3-methyl-4-trifluoromethyl-1-(2H)-pyrimidinyl]-benzoyloxy}-propionat,
tert.-butyl 2-{2-chloro-5-[3,6-dihydro-2,6-dioxo-3-methyl-4-trifluoromethyl-1(2H)-pyrimidinyl]-benzoyloxy-2-methyl-propionat,
allyl 2-{2-chloro-5-[3,6-dihydro-2,6-dioxo-3-methyl-4-trifluoromethyl-1(2H)-pyrimidinyl]-benzoyloxy}-2-methyl-propionat,
cyclopentyl 2-{2-chloro-5-[3,6-dihydro-2,6-dioxo-3-methyl-4-trifluoromethyl-1(2H)-pyrimidinyl]-benzoyloxy}-2-methyl-propionat,
ethyl 2-{2-chloro-5-[3,6-dihydro-2,6-dioxo-3-methyl-4-trifluoromethyl-1-(2H)-pyrimidinyl]-benzoyloxy}-propionat,
ethyl 2-{2-chloro-5-[3,6-dihydro-2,6-dioxo-3-methyl-4-trifluoromethyl-1(2H)-pyrimidinyl]-benzoyloxy}-2-methyl-propionat,
1-acetylethyl 2-chioro-5-[3,6-dihydro-2,6-dioxo-3-methyl 4-trifluoromethyl-1(2H)-pyrimidinyl]-benzoat und
ethyl 3-{2-chloro-5-[3,6-dihydro-2,6-dioxo-3-methyl-4-trifluoromethyl-1(2H)-pyrimidinyl]-benzoyloxy]-butanoat.

Besonders bevorzugte Verbindungen der Formel (I) sind Butafenacil ((I-1), 2-chloro-5-[3,6-dihydro-2,6-dioxo-3-methyl-4-trifluormethyl-1(2H)pyrimidinyl] benzoesäure 1,1-dimethyl-2-oxo-2-(2-propenyloxy)ethylester,
CAS-Nr.: 134 605-64-4)
und Flupropacil ((I-2), 1-methylethyl 2-chloro-5-[3,6-dihydro-2,6-dioxo-3-methyl-4-trifluormethyl-1-(2H)-pyrimidinyl]-benzoat, UCC-C4243).

Die Safener (B) sind ausgewählt aus der Gruppe bestehend aus:
a) Verbindungen der Formeln (II) oder (III), 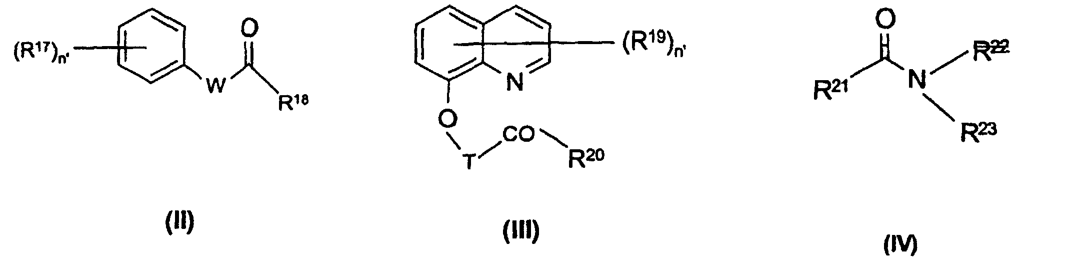
wobei die Symbole und Indizes folgende Bedeutungen haben:
- n': ist eine natürliche Zahl von 0 bis 5, vorzugsweise 0 bis 3;
- T: ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist;
- W: ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist, vorzugsweise ein Rest aus der Gruppe (W1) bis (W4), 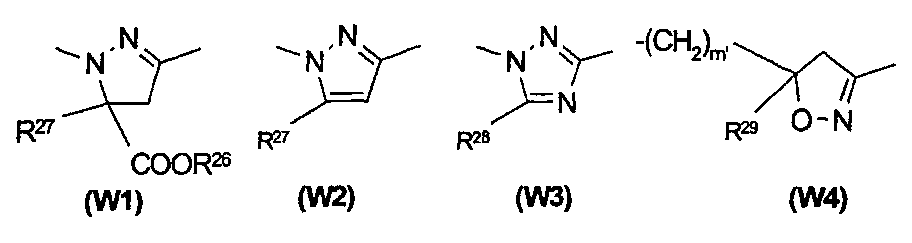
- m': ist 0 oder 1;
- R¹⁷, R¹⁹: sind gleich oder verschieden Halogen, (C₁-C₄)Alkyl, (C₁-C₄)Alkoxy, Nitro oder (C₁-C₄)Haloalkyl;
- R¹⁸, R²⁰: sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (II) bzw. (III) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
- R²⁴: ist Wasserstoff oder ein unsubstituierter oder substituierter aliphatischer Kohlenwasserstoffrest, vorzugsweise mit insgesamt 1 bis 18 C-Atomen;
- R²⁵: ist Wasserstoff, (C₁-C₆)Alkyl, (C₁-C₆)Alkoxy oder substituiertes oder unsubstituiertes Phenyl;
- R²⁶: ist Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl;
- R²⁷, R²⁸, R²⁹: sind gleich oder verschieden Wasserstoff, (C₁-C₈)Alkyl, (C₁-C₈)Haloalkyl,
(C₃-C₁₂)Cycloalkyl oder substituiertes oder unsubstituiertes Phenyl;
einschließlich der Stereoisomeren und der in der Landwirtschaft gebräuchlichen Salze.

Herbizid wirksame Menge bedeutet im Sinne der Erfindung eine Menge an einem oder mehreren Herbiziden, die geeignet ist, den Pflanzenwuchs negativ zu beinflussen.

Antidotisch wirksame Menge bedeutet im Sinne der Erfindung eine Menge an einem oder mehreren Safenem, die geeignet ist, der phytotoxischen Wirkung eines Herbizids oder Herbizidgemisches an einer Nutzpflanze zumindest teilweise entgegenzuwirken.

Sofern es im einzelnen nicht anders definiert wird, gelten für die Reste in den Formeln zu (I) bis (III) und nachfolgenden Formeln im allgemeinen die folgenden Definitionen.

Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein.

Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B. Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.

Halogen bedeutet Fluor, Chlor, Brom oder lod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₃CF₂, CH₂FCHCl, CCl₃, CHCl₂, CH₂CH₂Cl. Haloalkoxy ist z.B. OCF₃, OCHF₂, OCH₂F, CF₃CF₂O, OCH₂CF₃ und OCH₂CH₂Cl. Entsprechendes gilt für sonstige Halogen substituierte Reste.

Ein Kohlenwasserstoffrest kann ein aromatischer oder ein aliphatischer Kohlenwasserstoffrest sein, wobei ein aliphatischer Kohlenwasserstoffrest im allgemeinen ein geradkettiger oder verzweigter gesättigter oder ungesättigter Kohlenwasserstoffrest ist, vorzugsweise mit 1 bis 18, besonders bevorzugt 1 bis 12 C-Atomen, z.B. Alkyl, Alkenyl oder Alkinyl.
Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.

Aryl ist im allgemeinen ein mono-, bi- oder polycyclisches aromatisches System mit vorzugsweise 6-20 C-Atomen, bevorzugt 6 bis 14 C-Atomen, besonders bevorzugt 6 bis 10 C-Atomen, z.B. Phenyl, Naphthyl, Tetrahydronaphthyl, Indenyl, Indanyl, Pentalenyl und Fluorenyl, besonders bevorzugt Phenyl.

Heterocyclischer Ring, heterocyclischer Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.

Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.

Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S. Ganz besonders bevorzugte teilweise ungesättigte Heterocyclen sind Pyrazolin, Imidazolin und Isoxazolin.

Ebenso bevorzugt ist Heteroaryl, z.B. mono- oder bicyclische aromatische Heterocyclen mit 5 bis 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol. Ganz besonders bevorzugt sind Pyrazol, Thiazol, Triazol und Furan.

Substituierte Reste, wie substituierte Kohlenwasserstoffreste, z.B. substituiertes Alkyl, Alkenyl, Alkinyl, Aryl wie Phenyl und Arylalkyl wie Benzyl, oder substituiertes Heterocyclyl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Substituenten aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Substituenten entsprechende ungesättigte aliphatische Substituenten, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-Arylamino sowie N-Heterocyclen. Dabei sind Alkylreste mit 1 bis 4 C-Atomen bevorzugt. Aryl ist dabei vorzugsweise Phenyl. Substituiertes Aryl ist dabei vorzugsweise substituiertes Phenyl. Für Acyl gilt dabei die weiter unten genannte Definition, vorzugsweise (C₁-C₄)Alkanoyl. Entsprechendes gilt für substituiertes Hydroxylamino oder Hydrazino.

Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)Alkyl, (C₁-C₄)Alkoxy, (C₁-C₄)Hatoalkyl, (C₁-C₄)Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, mund p-Methoxyphenyl.

Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohtensäuremonoestern, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.

Von den Formeln (I) bis (III) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isornere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Herbizide der allgemeinen Formel (I) sind z.B. aus EP-A-436 680 bekannt, die ausführliche Angaben zu Herstellungsverfahren und Ausgangsmaterialien enthält und bevorzugte Verbindungen nennt. Auf die Schrift wird ausdrücklich Bezug genommen, sie gilt durch Zitat als Bestandteil dieser Beschreibung. Die Verbindungen der Formel (II) sind z.B. aus EP-A-0 333 131 (ZA-89/1960), EP-A-0 269 806 (US-A-4,891,057), EP-A-0 346 620 (AU-A-89/34951), EP-A-0 174 562, EP-A-0 346 620 (WO-A-91/08 202), WO-A-91/07 874 oder WO-A 95/07 897 (ZA 94/7120) und der dort zitierten Literatur bekannt oder können nach oder analog den dort beschriebenen Verfahren hergestellt werden. Die Verbindungen der Formel (III) sind aus EP-A-0 086 750, EP-A-0 94349 (US-A-4,902,340), EP-A-0 191736 (US-A-4,881,966) und EP-A-0 492 366 und dort zitierter Literatur bekannt oder können nach oder analog den dort beschriebenen Verfahren hergestellt werden. Einige Verbindungen sind ferner in EP-A-0 582 198 beschrieben.

Die zitierten Schriften enthalten ausführliche Angaben zu Herstellungsverfahren und Ausgangsmaterialien und nennen bevorzugte Verbindungen.

Bevorzugt sind Herbizid-Safener-Kombinationen, enthaltend Safener der Formel (II) und/oder (III) bei denen die Symbole und Indizes folgende Bedeutungen haben:
- R²⁴: ist Wasserstoff, (C₁-C₁₈)-Alkyl, (C₃-C₁₂)-Cycloalkyl, (C₂-C₈)-Alkenyl und (C₂-C₁₈)Alkinyl, wobei die C-haltigen Gruppen durch einen oder mehrere, vorzugsweise bis zu drei, Reste R⁵⁰ substituiert sein können;
- R⁵⁰: ist gleich oder verschieden Halogen, Hydroxy, (C₁-C₈)-Alkoxy, (C₁-C₈)Alkylthio, (C₂-C₈)Alkenylthio, (C₂-C₈)Alkinylthio, (C₂-C₈)Alkenyloxy, (C₂-C₈)Alkinyloxy, (C₃-C₇)Cycloalkyl, (C₃-C₇)Cycloalkoxy, Cyano, Mono- und Di-(C₁-C₄)-alkyl)-amino, Carboxy, (C₁-C₈)Alkoxycarbonyl, (C₂-C₈)Alkenyloxycarbonyl, (C₁-C₈)Alkylthiocarbonyl, (C₂-C₈)Alkinyloxycarbonyl, (C₁-C₈)Alkylcarbonyl, (C₂-C₈)Alkenylcarbonyl, (C₂-C₈)Alkinylcarbonyl, 1-(Hydroxyimino)-(C₁-C₆)-alkyl, 1-[(C₁-C₄)Alkylimino]-(C₁-C₄)-alkyl, 1-[(C₁-C₄)Alkoxyimino]-(C₁-C₆)-alkyl, (C₁-C₈)Alkylcarbonylamino, (C₂-C₈)Alkenylcarbonylamino, (C₂-C₈)Alkinylcarbonylamino, Aminocarbonyl, (C₁-C₈)Alkylaminocarbonyl, Di-C₁-C₆)-alkylaminocarbonyl, (C₂-C₆)Alkenylaminocarbonyl, (C₂-C₆)Alkinylaminocarbonyl, (C₁-C₈)Alkoxycarbonylamino, (C₁-C₈)Alkylaminocarbonylamino, (C₁-C₆)Alkylcarbonyloxy, das unsubstituiert oder durch R⁵⁰ substituiert ist, (C₂-C₆)Alkenylcarbonyloxy, (C₂-C₆)Alkinylcarbonyloxy, (C₁-C₈)Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch Reste R⁵² substituiert sind; SiR'₃, -O-SiR'₃, R'₃Si-(C₁-C₈)-alkoxy, -CO-O-NR'₂, -O-N=CR'₂, -N=CR'₂, -O-NR'₂, -NR'₂, CH(OR')₂, -O-(CH₂)ₘ -CH(OR')₂, -CR'''(OR')₂ , -O-(CH₂)ₘCR'''(OR")₂ oder durch R"O-CHR'''CHCOR"-(C₁-C₆)-alkoxy,
- R⁵¹: ist gleich oder verschieden Halogen, Nitro, (C₁-C₄)Alkoxy und unsubstituiertes oder mit einem oder mehreren, vorzugsweise bis zu drei Resten R⁵¹ substituiertes Phenyl;
- R⁵²: ist gleich oder verschieden Halogen, (C₁-C₄)Alkyl, (C₁-C₄)Alkoxy, (C₁-C₄)Haloalkyl, (C₁-C₄)-Haloalkoxy oder Nitro;
- R': ist gleich oder verschieden Wasserstoff, (C₁-C₄)Alkyl, unsubstituiertes oder durch einen oder mehrere, vorzugsweise bis zu drei, Reste R⁵² substituiertes Phenyl oder zwei Reste R' bilden zusammen eine (C₂-C₆)Alkandiylkette;
- R": ist gleich oder verschieden (C₁-C₄)Alkyl oder zwei Reste R" bilden zusammen eine (C₂-C₆)Alkandiylkette;
- R''': ist Wasserstoff oder (C₁-C₄)Alkyl;
- m: ist 0, 1, 2, 3, 4, 5 oder 6.

Besonders bevorzugt sind erfindungsgemäße Herbizid-Safener-Kombinationen, enthaltend Safener der Formel (II) und/oder (III), bei denen die Symbole und Indizes folgende Bedeutungen haben:
- R²⁴: ist Wasserstoff, (C₁-C₈)Alkyl oder (C₃-C₇)Cycloalkyl, wobei die vorstehenden C-haltigen Reste unsubstituiert sind oder ein- oder mehrfach durch Halogen oder ein- oder zweifach, vorzugsweise einfach, durch Reste R⁵⁰ substituiert sind,
- R⁵⁰: ist gleich oder verschieden Hydroxy, (C₁-C₄)Alkoxy, Carboxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)-alkyl, 1-[(C₁-C₄)Alkylimino]-(C₁-C₄)-alkyl und 1-[(C₁-C₄)Alkoxyimino]-(C₁-C₄)-alkyl; -SiR'₃, -O-N=CR'₂, -N=CR'₂, -NR'₂, und -O-NR'₂, worin R' gleich oder verschieden Wasserstoff, (C₁-C₄)Alkyl oder paarweise eine (C₄-C₅)Alkandiylkette bedeutet,
- R²⁷, R²⁸, R²⁹: sind gleich oder verschieden Wasserstoff, (C₁-C₈)Alkyl, (C₁-C₆)Haloalkyl, (C₃-C₇)Cycloalkyl oder Phenyl, das unsubstituiert oder durch einen oder mehrere der Reste aus der Gruppe Halogen, Cyano, Nitro, Amino, Mono- und Di-[(C₁-C₄)alkyl]-amino, (C₁-C₄)Alkyl, (C₁-C₄)Haloalkyl, (C₁-C₄)Alkoxy, (C₁-C₄)Haloalkoxy, (C₁-C₄)Alkylthio und (C₁-C₄)Alkylsulfonyl substituiert ist;
- R²⁶: ist Wasserstoff, (C₁-C₈)Alkyl, (C₁-C₈)Haloalkyl, (C₁-C₄-Alkoxy)-(C₁-C₄)-alkyl, (C₁-C₆)Hydroxyalkyl, (C₃-C₇)Cycloalkyl oder Tri-(C₁-C₄)-alkylsilyl bedeutet,
- R¹⁷, R¹⁹: sind gleich oder verschieden Halogen, Methyl, Ethyl, Methoxy, Ethoxy, (C₁ oder C₂)-Haloalkyl, vorzugsweise Wasserstoff, Halogen oder (C₁ oder C₂)Haloalkyl.

Ganz besonders bevorzugt sind Safener in welchen die Symbole und Indizes in Formel (II) folgende Bedeutungen haben:
- R¹⁷: ist Halogen, Nitro oder (C₁-C₄)Haloalkyl;
- n': ist 0, 1, 2 oder 3;
- R¹⁸: ist ein Rest der Formel OR²⁴,
- R²⁴: ist Wasserstoff, (C₁-C₈)Alkyl oder (C₃-C₇)Cycloalkyl, wobei die vorstehenden C-haltigen Reste unsubstituiert sind oder ein- oder mehrfach, vorzugsweise bis zu dreifach, durch gleiche oder verschiedene Halogen-Reste oder bis zu zweifach, vorzugsweise einfach, durch gleiche oder verschiedene Reste aus der Gruppe Hydroxy, (C₁-C₄)Alkoxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)-alkyl, 1-[(C₁-C₄)Alkylimino]-(C₁-C₄)-alkyl, 1-[(C₁-C₄)Alkoxyimino]-(C₁-C₄)-alkyl und Reste der Formeln -SiR'₃, -O-N=R'₂, -N=CR'₂, -NR'₂ und -O-NR'₂ substituiert sind, wobei die Reste R' in den genannten Formeln gleich oder verschieden Wasserstoff, (C₁-C₄)Alkyl oder paarweise (C₄ oder C₈)Alkandiyl bedeuten;
- R²⁷, R²⁸, R²⁹: sind gleich oder verschieden Wasserstoff, (C₁-C₈)Alkyl, (C₁-C₆)Haloalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Alkoxy, Nitro, (C₁-C₄)Haloalkyl und (C₁-C₄)Haloalkoxy substituiert ist, und
- R²⁶: ist Wasserstoff, (C₁-C₈)Alkyl, (C₁-C₈)Haloalkyl, (C₁-C₄)Alkoxy-(C₁-C₄)-alkyl, (C₁-C₆)Hydroxyalkyl, (C₃-C₇)Cycloalkyl oder Tri-(C₁-C₄)-alkylsilyl.

Ganz besonders bevorzugt sind auch Safener der Formel (III), bei denen die Symbole und Indizes folgende Bedeutungen haben:
- R¹⁹: ist Halogen oder (C₁-C₄)Haloalkyl;
- n': ist 0, 1, 2 oder 3, wobei (R¹⁹)_{n'} vorzugsweise 5-Cl ist;
- R²⁰: ist ein Rest der Formel OR²⁴;
- T: ist CH₂ oder CH(COO-(C₁-C₃-Alkyl)) und
- R²⁴: ist Wasserstoff, (C₁-C₈)Alkyl, (C₁-C₈)Haloalkyl oder (C₁-C₄)Alkoxy-(C₁-C₄)-alkyl, vorzugsweise (C₁-C₈)Alkyl.

Insbesondere bevorzugt sind dabei Safener der Formel (II) bei denen die Symbole und Indizes folgende Bedeutungen haben:
- W: ist (W1);
- R¹⁷: ist Halogen oder (C₁-C₂)Haloalkyl;
- n': ist 0, 1, 2 oder 3, wobei (R¹⁷)_{n'} vorzugsweise 2,4-Cl₂ ist;
- R¹⁸: ist ein Rest der Formel OR²⁴;
- R²⁴: ist Wasserstoff, (C₁-C₈)Alkyl, (C₁-C₄)Haloalkyl, (C₁-C₄)Hydroxyalkyl, (C₃-C₇)Cycloalkyl, (C₁-C₄)Alkoxy-(C₁-C₄)-alkyl oder Tri-(C₁-C₂)-alkylsilyl, vorzugsweise (C₁-C₄)Alkyl;
- R²⁷: ist Wasserstoff, (C₁-C₈)Alkyl, (C₁-C₄)Haloalkyl oder (C₃-C₇)Cycloarkyl, vorzugsweise Wasserstoff oder (C₁-C₄)Alkyl, und
- R²⁶: ist Wasserstoff, (C₁-C₈)Alkyl, (C₁-C₄)Haloalkyl, (C₁-C₄)Hydroxyalkyl, (C₃-C₇)Cycloalkyl, (C₁-C₄)Alkoxy-(C₁-C₄)-alkyl oder Tri-(C₁-C₂)-alkylsilyl, vorzugsweise Wasserstoff oder (C₁-C₄)Alkyl.

Insbesondere bevorzugt sind auch herbizide Mittel, enthaltend einen Safener der Formel (II), worin die Symbole und Indizes folgende Bedeutungen haben:
- W: ist (W2);
- R¹⁷: ist Halogen oder (C₁-C₂)Haloalkyl;
- n': ist 0, 1, 2 oder 3, wobei (R¹⁷)_{n'} vorzugsweise 2,4-Cl₂ ist;
- R¹⁸: ist ein Rest der Formel OR²⁴;
- R²⁴: ist Wasserstoff, (C₁-C₈)Alkyl, (C₁-C₄)Haloalkyl, (C₁-C₄)Hydroxyalkyl, (C₃-C₇)Cycloalkyl, (C₁-C₄-Alkoxy)-C₁-C₄-alkyl oder Tri-(C₁-C₂)-alkyl-silyl, vorzugsweise (C₁-C₄)Alkyl, und
- R²⁷: ist Wasserstoff, (C₁-C₈)Alkyl, (C₁-C₄)Haloalkyl, (C₃-C₇)Cycloalkyl oder Phenyl, vorzugsweise Wasserstoff oder (C₁-C₄)Alkyl.

Insbesondere bevorzugt sind auch Safener der Formel (II), worin die Symbole und Indizes folgende Bedeutungen haben:
- W: ist (W3);
- R¹⁷: ist Halogen oder (C₁-C₂)Haloalkyl;
- n': ist 0, 1, 2 oder 3, wobei (R¹⁷)_{n'} vorzugsweise 2,4-Cl₂ ist;
- R¹⁸: ist ein Rest der Formel OR²⁴;
- R²⁴: ist Wasserstoff, (C₁-C₈)Alkyl, (C₁-C₄)Haloalkyl, (C₁-C₄)Hydroxyalkyl, (C₃-C₇)Cycloalkyl, (C₁-C₄)Alkoxy-(C₁-C₄)-alkyl oder Tri-(C₁-C₂)-alkylsilyl, vorzugsweise (C₁-C₄)Alkyl, und
- R²⁸: ist (C₁-C₈)Alkyl oder (C₁-C₄)Haloalkyl, vorzugsweise C₁-Haloalkyl.

Insbesondere bevorzugt sind auch Safener der Formel (II), worin die Symbole und Indizes folgende Bedeutung haben:
- W: ist (W4);
- R¹⁷: ist Halogen, Nitro, (C₁-C₄)Alkyl, (C₁-C₂)Haloalkyl, vorzugsweise CF₃, oder (C₁-C₄)Alkoxy;
- n': ist 0, 1, 2 oder 3;
- m': ist 0 oder 1;
- R¹⁸: ist ein Rest der Formel OR²⁴ ;
- R²⁴: ist Wasserstoff, (C₁-C₄)Alkyl, Carboxy-(C₁-C₄)-alkyl, (C₁-C₄)Alkoxycarbonyl-(C₁-C₄)-alkyl, vorzugsweise (C₁-C₄)Alkoxy-CO-CH₂-, (C₁-C₄)Alkoxy-CO-C(CH₃)H-, HO-CO-CH₂- oder HO-CO-C(CH₃)H-, und
- R²⁹: ist Wasserstoff, (C₁-C₄)Alkyl, (C₁-C₄)Haloalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Haloalkyl, Nitro, Cyano und (C₁-C₄)Alkoxy substituiert ist.

Folgende Gruppen von Verbindungen sind insbesondere als Safener für die herbiziden Wirkstoffe der Formel (I) geeignet:
a) Verbindungen vom Typ der Dichlorphenylpyrazolin-3-carbonsäure (d.h. der Formel (II), worin W = (W1) und (R¹⁷)_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (II-1, Mefenpyr-diethyl), und verwandte Verbindungen, wie sie in der WO-A 91/07874 beschrieben sind;
b) Derivate der Dichlorphenylpyrazolcarbonsäure (d.h. der Formel (II), worin W = (W2) und (R¹⁷)_{n'} = 2,4-Cl₂ ist), vorzugsweise Verbindungen wie 1-(2,4-Dichlorphenyl)-5-methyl-pyrazol-3-carbonsäureethylester (II-2), 1-(2,4-Dichlorphenyl)-5-isopropyl-pyrazol-3-carbonsäureethylester (II-3), 1-(2,4-Dichlorphenyl)-5-(1,1-dimethyl-ethyl)pyrazol-3-carbonsäureethylester (II-4), 1-(2,4-Dichlorphenyl)-5-phenyl-pyrazol-3-carbonsäureethylester (II-5) und verwandte Verbindungen, wie sie in EP-A-0 333131 und EP-A-0 269 806 beschrieben sind.
c) Verbindungen vom Typ der Triazolcarbonsäuren (d.h. der Formel (II), worin W = (W3) und (R¹⁷)_{n'} = 2,4-Cl₂ ist), vorzugsweise Verbindungen wie Fenchlorazol-ethyl, d.h. 1-(2,4-Dichlorphenyl)-5-trichlormethyl-(1H)-1,2,4-triazol-3-carbonsäureethylester (II-6), und verwandte Verbindungen (siehe EP-A-0 174 562 und EP-A-0 346 620);
d) Verbindungen vom Typ der 5-Benzyl- oder 5-Phenyl-2-isoxazolin-3-carbonsäure oder der 5,5-Diphenyl-2-isoxazolin-3-carbonsäure, (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureethylester (II-8) und verwandte Verbindungen, wie sie in WO-A-91/08202 beschrieben sind, oder der 5,5-Diphenyl-2-isoxazolincarbonsäureethylester (II-9, Isoxadifen-ethyl) oder -n-propylester (II-10) oder der 5-(4-Fluorphenyl)-5-phenyl-2-isoxazolin-3-carbonsäureethylester (II-11), wie sie in der WO-A-95/07897 beschrieben sind.
e) Verbindungen vom Typ der 8-Chinolinoxyessigsäure, z.B. solche der Formel (III), worin (R¹⁹)_{n'} = 5-Cl, R²⁰ = OR²⁴ und T = CH₂ ist, vorzugsweise die Verbindungen
   (5-Chlor-8-chinolinoxy)essigsäure-(1-methylhexyl)-ester (III-1, Cloquintocetmexyl),
   (5-Chlor-8-chinolinoxy)essigsäure-(1,3-dimethyl-but-1-yl)-ester (III-2),
   (5-Chlor-8-chinolinoxy)essigsäure-4-allyl-oxy-butylester (III-3),
   (5-Chlor-8-chinolinoxy)essigsäure-1-allyloxy-prop-2-ylester (III-4),
   (5-Chlor-8-chinolinoxy)essigsäureethylester (III-5),
   (5-Chlor-8-chinolinoxy)essigsäuremethylester (III-6),
   (5-Chlor-8-chinolinoxy)essigsäureallylester (III-7),
   (5-Chlor-8-chinolinoxy)essigsäure-2-(2-propyliden-iminoxy)-1-ethylester (III-8),
   (5-Chlor-8-chinolinoxy)essigsäure-2-oxo-prop-1-ylester (III-9)
   und verwandte Verbindungen, wie sie in EP-A-0 860 750, EP-A-0 094 349 und EP-A-0 191 736 oder EP-A-0 492 366 beschrieben sind.
f) Verbindungen vom Typ der (5-Chlor-8-chinolinoxy)-malonsäure, d.h. der Formel (III), worin (R¹⁹)_{n'} = 5-Cl, R²⁰= OR²⁴, T = -CH(COO-Alkyl)- ist, vorzugsweise die Verbindungen (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.

Beispiele für bevorzugte Kombinationen von herbiziden Wirkstoffen (A) und Safenern (B) sind: (I - 1) + (II - 1), (I - 1) + (II - 9), (I - 1) + (III - 1), (I - 2) + (II - 1),(I - 2) + (II - 9), (I - 2) + (III - 1).

Die Safener (Antidote) der Formeln (II) und (III), beispielsweise Safener der bevorzugten Gruppen a) bis f), reduzieren oder unterbinden phytotoxische Effekte, die beim Einsatz der herbiziden Wirkstoffe der Formel (I) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Mais, Reis und andere Kulturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener: herbizider Wirkstoff kann innerhalb weiter Grenzen variieren und liegt vorzugsweise im Bereich von 1:100 bis 100:1, insbesondere von 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch einfache, routinemäßige Vorversuche ermitteln.

Haupteinsatzgebiete für die Anwendung der erfindungsgemäße Kombinationen sind vor allem Mais und Getreidekulturen (z.B. Weizen, Roggen, Gerste, Hafer), Reis, Sorghum, Baumwolle und Sojabohne, vorzugsweise Getreide, Reis und Mais.

Die in dem erfindungsgemäßen herbiziden Mittel enthaltenen Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist weiterhin ein Verfahren zur Bekämpfung von Schadpflanzen in Pflanzenkulturen, das dadurch gekennzeichnet ist, daß eine herbizid wirksame Menge des erfindungsgemäßen herbizid wirksamen Mittels auf die Schadpflanzen, Kulturpflanzen, Pflanzensamen oder die Fläche, auf der die Pflanzen wachsen, aufgebracht wird. Dabei kann die antidotisch wirksame Menge an einem oder mehreren Safenem, vorzugsweise einer oder mehrerer, insbesondere einer, Verbindung der Formel (II) und/oder (II), vor, nach oder gleichzeitig mit dem(n) herbiziden Wirkstoff(en) der Formel (I) auf die Pflanzen, Pflanzensamen oder die Fläche, auf der die Pflanzen wachsen, appliziert werden.

Die erfindungsgemäße Herbizid-Safener Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Emtegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide (z.B. Weizen, Gerste, Roggen, Hafer), Hirse, Reis, Maniok und Mais oder auch Kulturen von Zuckerrübe, Baumwolle, Soja, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung des erfindungsgemäßen herbizid wirksamen Mittels zur Bekämpfung von Schadpflanzen in transgenen Kulturpflanzen oder Kulturpflanzen, die Toleranz durch Selektionszüchtung aufweisen.

Die Safener, vorzugsweise der Formeln (II) und/oder (III) und die genannten herbiziden Wirkstoffe der Formel (I) können auf verschiedene Art, gemeinsam oder getrennt formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugsund Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen agrochemischen Wirkstoffen herstellen, z.B. mit als Pflanzenschutzmittel wirksamen Stoffen, wie Insektiziden, Akariziden, Herbiziden, Fungiziden oder Safenem, Düngemitteln und/oder Wachstumsregulatoren, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die Wirkstoffe, z.B. die herbiziden Wirkstoffe und/oder die Safener beispielsweise in üblichen Apparaturen, wie Hammermühlen, Gebläsemühlen und Luftstrahlmühlen, feingemahlen und gleichzeitig oder anschließend mit den Fornnulierungshitfsmitteln vermischt.

Emulgierbare Konzentrate werden z.B. durch Auflösen des Wirkstoffes z.B. des herbiziden Wirkstoffs und/oder des Safeners in einem organischen Lösungsmittel, wie Butanol, Cyclohexanon, Dimethylformamid, Xylol oder auch höhersiedende Kohlenwasserstoffe wie Aromaten, gesättige oder ungesättigte Aliphaten oder Alicyclen, oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: (C₆-C₁₈)-Alkylarylsulfonsaure Calzium-Salze, wie Ca-dodecylbenzolsulfonat, oder nichtionische Emulgatoren, wie Fettsäurepolyglykolester, (C₂-C₁₈)-Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxethylensorbitanester, wie Polyoxyethylensorbitanfettsäureester.

Stäubemittel erhält man im allgemeinen durch Vermahlen des Wirkstoffes z.B. des herbiziden Wirkstoffs und / oder des Safeners mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. Öl-in-Wasser-Emulsionen (EW), lassen sich beispielsweise mittels Rührem, Kolloidmühlen und/oder statischen Mischern unter Verwendung von wäßrigen organischen Lösungsmitteln und gegebenenfalls Tensiden, wie sie z.B. bei den anderen Formulierungstypen bereits aufgeführt sind, herstellen.

Granulate können entweder durch Verdüsen des Wirkstoffes z.B. des herbiziden Wirkstoffes und / oder des Safeners auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen, wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren, wie Sprühtrocknung, Wirbelbett-Granulierung, Teller-Granulierung, Mischung mit Hochgeschwindigkeitsmischern und Extrusion ohne festes Inertmaterial, hergestellt.

Zur Herstellung von Teller-, Fließbett-, Extruder- und Sprühgranulaten siehe z.B. in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gew.-%, insbesondere 0,1 bis 95 Gew.-% Wirkstoffe, z.B. Safener-Wirkstoffe (B), vorzugsweise der Formel (II) und/oder (III), oder herbizide Wirkstoffe der Formel (I), oder des erfindungsgemäßen Herbizid/Safener-Wirkstoffgemischs, enthaltend Verbindungen der Formel (I) und Safener-Wirkstoffe (B), vorzugsweise Verbindungen der Formel (II) und/oder (III), und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten beträgt die Wirkstoffkonzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Als Kombinationspartner für die erfindungsgemäßen Mischungen in Mischungsformulierungen oder im Tank-Mix sind beispielsweise bekannte Wirkstoffe einsetzbar, wie sie in z.B. Weed Research 26, 441-445 (1986), oder "The Pesticide Manual", 10th edition, The British Crop Protection Council, 1994, und dort zitierter Literatur beschrieben sind. Als literaturbekannte Herbizide, die mit den erfindungsgemäßen Mischungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amidosulfuron; amitrol; AMS, d.h. Ammoniumsutfamat; anilofos; asulam; atrazin; azafenidine (DPX-R6447), azimsulfurone (DPX-A8947); aziprotryn; barban; BAS 516 H, d.h. 5-Fluor-2-phenyl-4H-3,1-benzoxazin-4-on; benazolin; benfluralin; benfuresate; bensulfuronmethyl; bensulide; bentazone; benzofluor; benzoylprop-ethyl; benzthiazuron; bialaphos; bifenox; bispyribac-natrium (KIH-2023), bromacil; bromobutide; bromofenoxim; bromoxynil; bromuron; buminafos; busoxinone; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorailylester; chlomethoxyfen; chloramben; chloransulam-methyl (XDE-565), chlorazifop-butyl, chlorbromuron; chlorbufam; chlorfenac; chlorflurecol-methyl; chloridazon; chlorimuron ethyl; chlomitrofen; chlorotoluron; chloroxuron; chlorpropham; chlorsulfuron; chlorthaldimethyl; chlorthiamid; cinidon-ethyl, cinmethylin; cinosulfuron; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 014); cycloxydim; cycluron; cyhalofop und dessen Esterderivate (z.B. Butylester, DEH-112); cyperquat; cyprazine; cyprazole; 2,4-DB; dalapon; desmedipham; desmetryn; di-allate; dicamba; dichlobenil; dichlorprop; diclofop und dessen Ester wie dictofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimethazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), clomazon; dimethipin; dimetrasulfuron, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; epoprodan (MK-243), EPTC; esprocarb; ethalfluralin; ethametsulfuronmethyl; ethidimuron; ethiozin; ethofumesate; F5231, d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); ethoxysulfuron (aus EP 342569) etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)harnstoff (EP-A 079 683); 3-(4-Ethyl-6-methoxy-1,3,5-triazin-2-yl)-1-(2,3-dihydro-1,1-dioxo-2-methylbenzo[b]thiophen-7-sulfonyl)harnstoff (EP-A 079 683); fenoprop; fenoxan, fenoxaprop und fenoxaprop-P sowie deren Ester, z.B. fenoxaprop-P-ethyl und fenoxaprop-ethyl; fenoxydim; fenuron; flamprop-methyl; flazasulfuron; flufonacet (BAY-FOE-5043), fluazifop und fluazifop-P, florasulam (DE-570) und deren Ester, z.B. fluazifop-butyl und fluazifop-P-butyl; fluchloralin; flumetsulam; flumeturon; flumiclorac und dessen Ester (z.B. Pentylester, S-23031); flumioxazin (S-482); flumipropyn; flupoxam (KNW-739); fluorodifen; fluoroglycofenethyl; flupropacil (UBIC-4243); flupyrsulfuron-methyl natrium (DPX-KE459), fluridone; flurochloridone; fluroxypyr; flurtamone; fluthiacet-methyl (KIH-9201 ), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester; hexazinone; imazamethabenzmethyl; imazamox (AC-299263), imazapyr; imazaquin und Salze wie das Ammoniumsalz; imazethamethapyr; imazethapyr, imazosulfuron; iodosulfuron (Methyl-4-iod-2-[3-(4-methoxy-6-methyl-1,3,5-triazin-2-yl)ureidosulfonyl]-benzoat, Natriumsalz, WO 92/13845); ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metabenzuron, Methyl-2-[3-(4,6-dimethoxypyrimidin-2-yl)ureidosulfonyl]-4-methansulfonamidomethylbenzoat (WO 95/10507); methobenzuron; metobromuron; metolachlor, S-metolachlor, metosulam (XRD 511); metoxuron; metribuzin; metsulfuron-methyl; MH; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; N,N-Dimethyl-2-[3-(4,6-dimethoxypyrimidin-2-yl)ureidosulfonyl]-4-formylaminobenzamid (WO 95/01344); naproanilide; napropamide; naptalam; NC 310, d.h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiargyl (RP-020630); oxadiazon; oxaziclomefone (MY-100), oxyfluorfen; oxasulfuron (CGA-277476), paraquat; pebulate; pendimethalin; pentoxazone (KPP-314), perfluidone; phenisopham; phenmedipham; picloram; piperophos; piributicarb; pirifenop-butyl; pretilachlor; primisulfuron-methyl; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prosulfuron (CGA-152005); prynachlor; pyraflufen-ethyl (ET-751 ), pyrazon; pyrazosulfuron-ethyl; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quinofop und dessen Esterderivate, quizalofop und quizalofop-P und deren Esterderivate z.B. quizalofopethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und - methylester; sulfentrazon (FMC-97285, F-6285); sulfazuron; sulfometuron-methyl; sulfosate (ICI-A0224); sulfosulfuron (MON-37500), TCA; tebutam (GCP-5544); tebuthiuron; tepraloxidim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thidiazimin (SN-124085); thifensulfuron-methyl; thiobencarb; tiocarbazil; tralkoxydim; tri-allate; triasulfuron; triazofenamide; tribenuron-methyl; trictopyr; tridiphane; trietazine; trifluralin; triflusulfuron und Ester (z.B. Methylester, DPX-66037); trimeturon; tsitodef; vemolate; WL 110547, d.h. 5-Phenoxy-1-[3-(trifluormethyl)-phenyl]-1H-tetrazol; UBH-509; D-489; LS 82-556; KPP-300; KPP-421, MT-146, NC-324; KH-218; DPX-N8189; DOWCO-535; DK-8910; V-53482; PP-600; MBH-001.

Zur Anwendung werden die in handelsüblicher Form vorliegenden Formulierungen gegebenenfalls in üblicher Weise verdünnt z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids, u.a. variiert die erforderliche Aufwandmenge der Herbizide der Formel (I). Sie kann innerhalb weiter Grenzen variiert werden, z.B. zwischen 0,001 und 10,0 kg/ha oder mehr an Herbizid, vorzugsweise liegt sie zwischen 0,005 und 5 kg/ha.

Folgende Beispiele dienen zur Erläuterung der Erfindung:
A. Formulierungsbeispiele
a) Ein Staubmittel wird erhalten, indem man 10 Gew.-Teile eines herbiziden Wirkstoffes der Formel (I) oder einer Verbindung der Formel (II) und/oder (III) oder eines Wirkstoffgemischs aus einem herbiziden Wirkstoff der Formel (I) und einem Safener der Formel (II) und/oder (III) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile eines herbiziden Wirkstoffs der Formel (I) oder einer Verbindung der Formel (II) und/oder (III) oder eines Wirkstoffgemischs aus einem herbiziden Wirkstoff der Formel (I) und einem Safener der Formel (II) und/oder (III), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares oder suspendierbares Konzentrat wird erhalten, indem man 20 Gewichtsteile eines herbiziden Wirkstoffes der Formel (I) oder einer Verbindung der Formel (II) und/oder (III) oder eines Wirkstoffgemischs aus einem herbiziden Wirkstoff der Formel (I) und einem Safener der Formel (II) und/oder (III), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277° C) mischt und in einer Reibkugelmühle auf eine Feinheit von unter 5 Mikron vermahlt.
d) Ein emulgierbares Konzentrat wird erhalten aus 15 Gew.-Teilen eines herbiziden Wirkstoffs der Formel (I) oder einer Verbindung der Formel (II) und/oder (III) oder eines Wirkstoffgemischs aus einem herbiziden Wirkstoff der Formel (I) und einem Safener der Formel (II) und/oder (III), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man

| | |
|---|---|
| 75 Gew.-Teile | eines herbiziden Wirkstoffs der Formel (I) oder einer Verbindung der Formel (II) und/oder (III) oder eines Wirkstoffgemischs aus einem herbiziden Wirkstoff der Formel (I) und einem Safener der Formel (II) und/oder (III) |
| 10 " | ligninsulfonsaures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man

| | |
|---|---|
| 25 Gew.-Teil(e) | eines herbiziden Wirkstoffs der Formel (I) oder einer Verbindung der Formel (II) und/oder (III) oder eines Wirkstoffgemischs aus einem herbiziden Wirkstoff der Formel (I) und einem Safener der Formel (II) und/oder (III) |
| 5 " | 2,2'-dinaphthylmethan-6,6'-disulfonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.
B. Biologische Beispiele
1. Bonitierung der Schadwirkung
Die Schadwirkung an den Pflanzen wird auf einer Skala von 0 bis 100 % optisch im Vergleich zu Kontrollpflanzen bewertet:

| | |
|---|---|
| 0 % = | keine erkennbare Wirkung im Vergleich zur unbehandelten Pflanze, |
| 100 % = | behandelte Pflanze stirbt ab |

2. Herbizidwirkung im Nachauflauf
Samen von mono-und dikotylen Unkräutern und von Kulturpflanzen werden in Plastiktöpfen in sandigem Lehmboden ausgelegt, mit Erde abgedeckt und im Gewächshaus unter guten Wachstumsbedingungen angezogen.

Drei Wochen nach der Aussaat werden die Versuchspflanzen im 3-4 Blattstadium behandelt. Die als Emulsionskonzentrate formulierten erfindungsgemäßen Einzelwirkstoffe werden in verschiedenen Dosierungen mit einer Wasseraufwandmengen von umgerechnet 300 l/ha einzeln oder als Mischungen auf die grünen Pflanzenteile gesprüht und nach 3 Wochen Standzeit der Versuchspflanzen im Gewächshaus unter optimalen Wachstumsbedingungen wird die Wirkung der Präparate optisch im Vergleich zu unbehandelten Kontrollen bonitiert. Die Ergebnisse sind in der nachfolgenden Tabelle 1 zusammengefaßt.

**Tabelle 1:**

| Wirkstoffe | Dosis g AS/ha | Schädigung (%) | |
|---|---|---|---|
| | | Weizen | Gerste |
| (I-1) | 100 | 40 | 30 |
| (I-1) | 50 | 25 | 20 |
| (I-1) | 25 | 15 | 10 |
| | | | |
| (I-1) + (II-1) | 100+100 | 15 | 10 |
| (I-1) + (II-1) | 50+50 | 5 | 0 |
| (I-1) + (II-1) | 25+25 | 0 | 0 |
| | | | |
| (I-1) + (III-1) | 100+100 | 15 | 15 |
| (I-1) + (III-1) | 50+50 | 10 | 10 |
| (I-1) + (III-1) | 25+25 | 0 | 5 |
| | | | |
| (I-1) + (II-9) | 50+50 | 10 | 10 |
| Abkürzungen: g AS/ha = g Aktivsubstanz pro Hektar | | | |

Die Bezeichnungen (I-1), (II-1), (III-1) und (II-9) sind in der Beschreibung erläutert.

Wie die Beispiele zeigen, sind die erfindungsgemäßen Kombinationen aus Herbiziden und Safenern in der Lage, Schäden an Kulturpflanzen wie Getreide im Vergleich zur Anwendung der einzelnen Herbizide ohne Safener wesentlich zu reduzieren.

## Patentansprüche

1. Herbizid wirksames Mittel, enthaltend eine Mischung aus
(A) einer herbizid wirksamen Menge an einer oder mehreren Verbindungen der Formel (I) 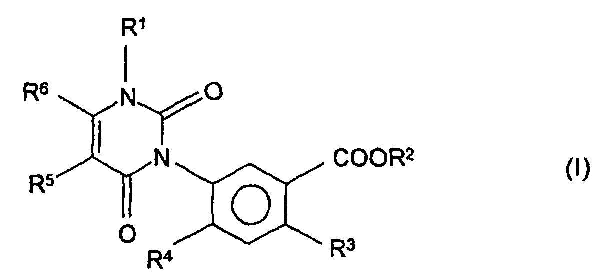 , worin
R¹ Wasserstoff, C₁-C₄-Alkyl, C₃-C₄-Alkenyl, C₃-C₄-Alkinyl oder C₁-C₄-Haloalkyl,
R² Wasserstoff, C₁-C₁₀-Alkyl, C₁-C₁₀-Haloalkyl, C₆-C₁₀-Aryl, C₆-C₁₀-Haloaryl, C₁-C₆-Alkylsulfonyl-C₁-C₄-Alkyl, di(C₁-C₆-alkyl)phosphono-C₁-C₄-alkyl, tri(C₁-C₆-alkyl)silyl-C₁-C₄-alkyl), C₂-C₇-alkanoyl-C₁-C₄-alkyl, carboxy-C₁-C₄-alkyl, (C₁-C₆-alkoxy)carbonyl-C₁-C₄-alkyl, {[C₃-C₉(α-alkylalkylidene)]iminooxy(C₁-C₆-alkoxy)carbonyl)-C₁-C₄-alkyl, (C₃-C₆-alkenyloxy)carbonyl-C₁-C₄-alkyl, (C₃-C₆-alkynyloxy)carbonyl-C₁-C₄-alkyl, (C₃-C₈-cycloalkyloxy)carbonyl-C₁-C₄-alkyl, phenoxy-C₁-C₄-alkyl, C₃-C₆-alkenyloxy-C₁-C₄-alkyl, C₃-C₈-cycloalkenyloxy-C₁-C₄-alkyl, C₅-C₈-cycloalkenyl, C₆-C₈-bicycloalkyl, C₆-C₈-bicycloalkenyl, C₂-C₇-cyanoalkyl oder C₃-C₆-alkynyloxy-C₁-C₄-alkyl,
R³ Wasserstoff, Halogen oder Cyano,
R⁴ Wasserstoff oder Halogen,
R⁵ Wasserstoff, Halogen oder C₁-C₄-alkyl, und
R⁶ C₁-C₄-alkyl oder C₁-C₄-Haloalkyl ist, oder R⁵ und R⁶ bilden zusammen Trimethylen oder Tetramethylen,
und die korrespondierenden Enol-Ether der Verbindung der Formel (I), worin R¹ verschieden von Wasserstoff und C₁-C₄-Haloalkyl ist sowie die Salze der Verbindung der Formel (I) worin R¹ Wasserstoff ist,
und
(B) einer antidotisch wirksamen Menge an einem oder mehreren Safenem, worin der oder die Safener (B) ausgewählt sind aus der Gruppe bestehend aus:
Verbindungen der Formeln (II) oder (III), 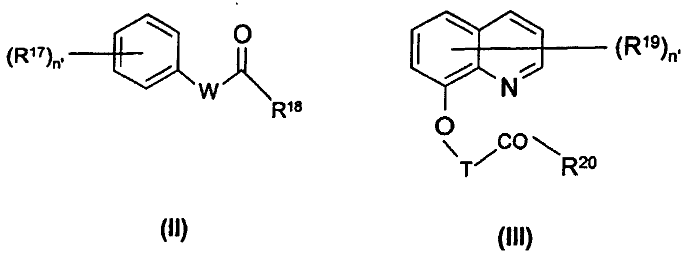
wobei die Symbole und Indizes folgende Bedeutungen haben:
n' ist eine natürliche Zahl von 0 bis 5, vorzugsweise 0 bis 3;
T ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist;
W ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist, vorzugsweise ein Rest aus der Gruppe (W1) bis (W4), 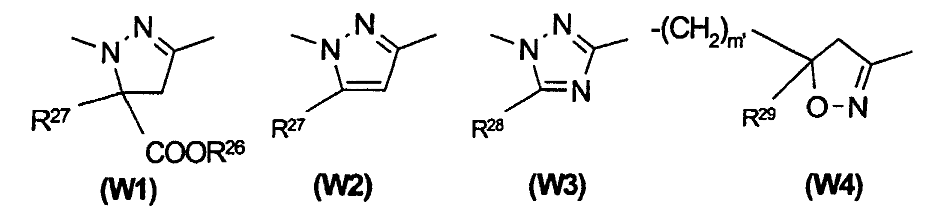
m' ist 0 oder 1;
R¹⁷, R¹⁹ sind gleich oder verschieden Halogen,
(C₁-C₄)Alkyl, (C₁-C₄)Alkoxy, Nitro oder (C₁-C₄)Haloalkyl;
R¹⁸, R²⁰ sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (II) bzw. (III) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
R²⁴ ist Wasserstoff oder ein unsubstituierter oder substituierter aliphatischer Kohlenwasserstoffrest, vorzugsweise mit insgesamt 1 bis 18 C-Atomen;
R²⁵ ist Wasserstoff, (C₁-C₆)Alkyl, (C₁-C₆)Alkoxy oder substituiertes oder unsubstituiertes Phenyl;
R²⁶ ist Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl;
R²⁷, R²⁸, R²⁹ sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
einschließlich der Stereoisomeren und der in der Landwirtschaft gebräuchlichen Salze.

2. Herbizid wirksames Mittel gemäß Anspruch 1, worin in der Verbindung der Formel (I)
R¹ C₁-C₄-alkyl, bevorzugt Methyl,
R² C₂-C₇-alkanoyl-C₁-C₄-alkyl, (C₁-C₆-alkoxy)carbonyl-C₁-C₄-alkyl, C₁-C₄-alkyl, {[C₃-C₉-(α-alkylalkylidene)iminooxy-(C₁-C₆-alkoxy)carbonyl]-C₁-C₄-alkyl, (C₃-C₆-alkenyloxy)-carbonyl-C₁-C₄-alkyl, (C₃-C₆-alkynyloxy)carbonyl-C₁-C₄-alkyl oder (C₃-C₈-cycloalkyloxy)carbonyl-C₁-C₄-alkyl,
R³ Halogen oder Cyano,
R⁴ Wasserstoff oder Fluor,
R⁵ Wasserstoff, Fluor oder Methyl, und
R⁶ Methyl, Trifluormethyl oder Pentafluorethyl ist.

3. Herbizid wirksames Mittel gemäß einem oder mehreren der Ansprüche 1 bis 2, worin das Gewichtsverhältnis Herbizid:Safener 1:100 bis 100:1 beträgt.

4. Herbizid wirksames Mittel gemäß einem oder mehreren der Ansprüche 1 bis 3, zusätzlich enthaltend einen oder mehrere weitere agrochemische Wirkstoffe.

5. Verfahren zur Bekämpfung von Schadpflanzen in Pflanzenkulturen, **dadurch gekennzeichnet, daß** eine herbizid wirksame Menge eines herbizid wirksamen Mittels gemäß einem oder mehreren der Ansprüche 1 bis 4 auf die Schadpflanzen, Kulturpflanzen, Pflanzensamen oder die Fläche, auf der die Pflanzen wachsen, aufgebracht wird.

6. Verfahren gemäß Anspruch 5, **dadurch gekennzeichnet, daß** die Kulturpflanzen aus der Gruppe Mais, Weizen, Roggen, Gerste, Hafer, Reis, Sorghum, Baumwolle und Soja stammen.

7. Verfahren gemäß Anspruch 5 oder 6, **dadurch gekennzeichnet, daß** die Kulturpflanzen transgen sind oder Toleranz durch Selektionszüchtung aufweisen.

8. Verwendung eines herbizid wirksamen Mittels gemäß einem oder mehreren der Ansprüche 1 bis 4, zur Bekämpfung von Schadpflanzen in Pflanzenkulturen.

## Claims

1. A herbicidally active composition comprising a mixture of
(A) a herbicidally effective amount of one or more compounds of the formula (I) 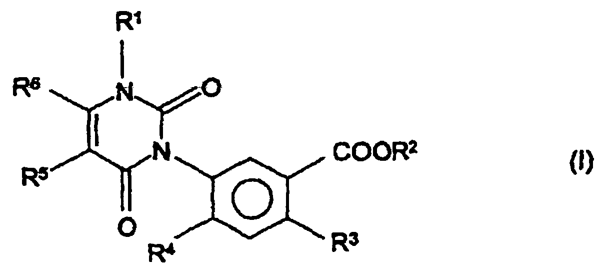 in which
R¹ is hydrogen, C₁-C₄-alkyl, C₃-C₄-alkenyl, C₃-C₄-alkynyl or C₁-C₄-haloalkyl,
R² is hydrogen, C₁-C₁₀-alkyl, C₁-C₁₀-haloalkyl, C₆-C₁₀-aryl, C₆-C₁₀-haloaryl, C₁-C₆-alkylsulfonyl-C₁-C₄-alkyl, di(C₁-C₆-alkyl)phosphono-C₁-C₄-alkyl, tri(C₁-C₆-alkyl)silyl-C₁-C₄alkyl), C₂-C₇-alkanoyl-C₁-C₄-alkyl, carboxy-C₁-C₄-alkyl, (C₁-C₆-alkoxy)carbonyl-C₁-C₄-alkyl, {[C₃-C₉(α-alkylalkylidene)]iminooxy-(C₁-C₆-alkoxy)carbonyl}-C₁-C₄-alkyl, (C₃-C₆-alkenyloxy)carbonyl-C₁-C₄-alkyl, (C₃-C₆-alkynyloxy)carbonyl-C₁-C₄-alkyl, (C₃-C₈-cycloalkyloxy)carbonyl-C₁-C₄-alkyl, phenoxy-C₁-C₄-alkyl, C₃-C₆-alkenyloxy-C₁-C₄-alkyl, C₃-C₈-cycloalkenyloxy-C₁-C₄-alkyl, C₅-C₈-cycloalkenyl, C₆-C₈-bicycloalkyl, C₆-C₈-bicycloaikenyl, C₂-C₇-cyanoalkyl or C₃-C₆-alkynyloxy-C₁-C₄-alkyl,
R³ is hydrogen, halogen or cyano,
R⁴ is hydrogen or halogen,
R⁵ is hydrogen, halogen or C₁-C₄-alkyl, and
R⁶ is C₁-C₄-alkyl or C₁-C₄-haloalkyl, or R⁵ and R⁶ together form trimethylene or tetramethylene,
and the corresponding enol ethers of the compound of the formula (I) in which R¹ is other than hydrogen and C₁-C₄-haloalkyl, and the salts of the compound of the formula (I) in which R¹ is hydrogen,
and
(B) an antidote-effective amount of one or more safeners, wherein the safener(s) (B) is/are selected from the group consisting of:
compounds of the formulae (II) or (III), 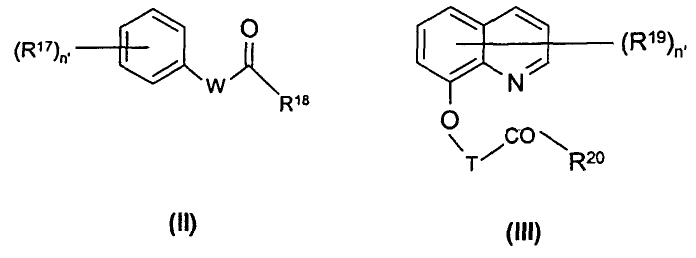
where the symbols and indices have the following meanings:
n' is a natural number from 0 to 5, preferably 0 to 3
T is a (C₁ or C₂)-alkanediyl chain which is unsubstituted or substituted by one or two (C₁-C₄)alkyl radicals or by [(C₁-C₃)-alkoxy]carbonyl,
W is an unsubstituted or substituted divalent heterocyclic radical selected from the group consisting of the partially unsaturated or aromatic five-ringed heterocycles having 1 to 3 hetero ring atoms of the type N or O, the ring containing at least one nitrogen atom and not more than one oxygen atom, preferably a radical selected from the group (W1) to (W4); 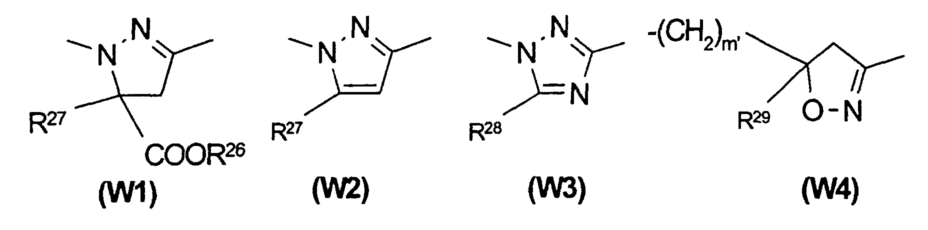
m' is 0 or 1;
R¹⁷, R¹⁹ are identical or different halogen, (C₁-C₄)alkyl, (C₁-C₄)alkoxy, nitro or (C₁-C₄)haloalkyl;
R¹⁸, R²⁰ are identical or different OR²⁴, SR²⁴ or NR²⁴R²⁵ or a saturated or unsaturated 3- to 7-membered heterocycle having at least one nitrogen atom and up to 3 hetero atoms, preferably from the group consisting of O and S, which heterocycle is linked to the carbonyl group in (II) or (III) via the nitrogen atom and which is unsubstituted or substituted by radicals selected from the group consisting of (C₁-C₄)alkyl, (C₁-C₄)alkoxy or optionally substituted phenyl, preferably a radical of the formula OR²⁴, NHR²⁵ or N(CH₃)₂, in particular of the formula OR²⁴;
R²⁴ is hydrogen or an unsubstituted or substituted aliphatic hydrocarbon radical preferably having 1 to 18 carbon atoms in total;
R²⁵ is hydrogen, (C₁-C₆)alkyl, (C₁-C₆)alkoxy or substituted or unsubstituted phenyl;
R²⁶ is hydrogen, (C₁-C₈)alkyl, (C₁-C₈)haloalkyl, (C₁-C₄)alkoxy-(C₁-C₄)alkyl, (C₁-C₆)hydroxyalkyl, (C₃-C₁₂)cycloalkyl or tri-(C₁-C₄)alkylsilyl;
R²⁷, R²⁸, R²⁹ are identical or different hydrogen, (C₁-C₈)alkyl, (C₁-C₈)haloalkyl, (C₃-C₁₂)cycloalkyl or substituted or unsubstituted phenyl;
inclusive of the stereoisomers and of the salts conventionally used in agriculture.

2. A herbicidally active composition as claimed in claim 1, where, in a compound of the formula (I)
R¹ is C₁-C₄-alkyl, preferably methyl,
R² is C₂-C₇-alkanoyl-C₁-C₄-alkyl, (C₁-C₆-alkoxy)carbonyl-C₁-C₄-alkyl, C₁-C₄-alkyl, {[C₃-C₉-(α-alkylalkylidene)iminooxy-(C₁-C₆-alkoxy)carbonyl]-C₁-C₄-alkyl, (C₃-C₆-alkenyloxy)carbonyl-C₁-C₄-alkyl, (C₃-C₆-alkynyloxy)carbonyl-C₁-C₄-alkyl or (C₃-C₈-cycloalkyloxy)carbonyl-C₁-C₄-alkyl,
R³ is halogen or cyano,
R⁴ is hydrogen or fluorine,
R⁵ is hydrogen, fluorine or methyl, and
R⁶ is methyl, trifluoromethyl or pentafluoroethyl.

3. A herbicidally active composition as claimed in one or more of claims 1 to 2, wherein the weight ratio herbicide:safener is 1:100 to 100:1.

4. A herbicidally active composition as claimed in one or more of claims 1 to 3, additionally containing one or more further agrochemical active ingredients.

5. A method of controlling harmful plants in plant crops, which comprises applying a herbicidally effective amount of a herbicidally active composition as claimed in one or more of claims 1 to 4 to the harmful plants, the crop plants, the seeds of the plants or the area on which the plants grow.

6. The method as claimed in claim 5, wherein the crop plants are selected from the group consisting of maize, wheat, rye, barley, oats, rice, sorghum, cotton and soya.

7. The method as claimed in claim 5 or 6, wherein the crop plants are transgenic or have tolerance owing to selection-based breeding.

8. The use of a herbicidally active composition as claimed in one or more of claims 1 to 4 for controlling harmful plants in plant crops.

## Revendications

1. Agent herbicide efficace, contenant un mélange de
(A) une quantité herbicide efficace d'un ou plusieurs composés de formule (I) 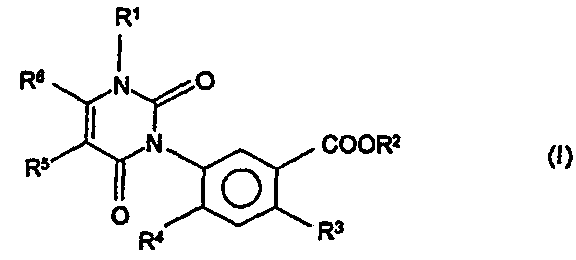 dans laquelle
R¹ représente un atome d'hydrogène, un groupe alkyle en C₁-C₄, alcényle en C₃-C₄, alcynyle en C₃-C₄ ou haloalkyle en C₁-C₄,
R² représente un atome d'hydrogène, un groupe alkyle en C₁-C₁₀, haloalkyle C₁-C₁₀, aryle en C₆-C₁₀, haloaryle C₆-C₁₀, alkylsulfonyle en C₁-C₆-alkyle en C₁-C₄, di (alkyle en C₁-C₆)phosphono-alkyle en C₁-C₄, tri(alkyle en C₁-C₆)silyl-alkyle en C₁-C₄, alkanoyle en C₂-C₇-alkyle en C₁-C₄, carboxy-alkyle en C₁-C₄, (alkoxy en C₁-C₆)carbonyl-alkyle en C₁-C₄, {[(α-alkylalkylidène) en C₃-C₉]iminooxy(alkoxy en C₁-C₆)carbonyl}-alkyle en C₁-C₄, (alcényloxy en C₃-C₆)carbonyl-alkyle en C₁-C₄, (alcynyloxy en C₃-C₆)carbonyl-alkyle en C₁-C₄, (cycloalkyloxy en C₃-C₈)carbonyl-alkyle en C₁-C₄, phénoxy-alkyle en C₁-C₄, alcényloxy en C₃-C₆-alkyle en C₁-C₄, cycloalcényloxy en C₃-C₈-alkyle en C₁-C₄, cycloalcényle en C₅-C₈, bicycloalkyle en C₆-C₈, bicycloalcényle en C₆-C₈, cyanoalkyle en C₂-C₇ ou alcynyloxy en C₃-C₆-alkyle en C₁-C₄,
R³ représente un atome d'hydrogène, d'halogène ou un groupe cyano,
R⁴ représente un atome d'hydrogène ou d'halogène,
R⁵ représente un atome d'hydrogène, d'halogène ou un groupe alkyle en C₁-C₄, et
R⁶ représente un groupe alkyle en C₁-C₄ ou haloalkyle en C₁-C₄, ou R⁵ et R⁶ représentent ensemble des groupes triméthyles ou tétraméthyles,
et les éthers énoliques correspondants du composé de formule (I), où R¹ est différent d'un atome d'hydrogène et d'un groupe haloalkyle en C₁-C₄, ainsi que les sels du composé de formule (I) où R¹ représente un atome d'hydrogène,
et
(B) une quantité antidote efficace d'un ou plusieurs antidotes où le ou les antidotes sont choisis parmi le groupe composé des :
composés de formules (II) ou (III), 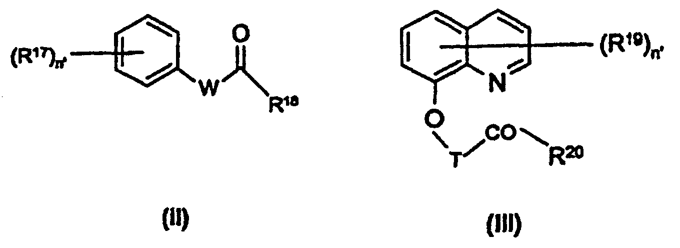 dans lesquelles les symboles et indices ont les significations suivantes :
n' vaut un nombre naturel de 0 à 5, de préférence de 0 à 3;
T est une chaîne (alcane en C₁ ou C₂)diylique qui est non substituée ou substituée par un ou deux restes alkyles en C₁-C₄ ou un reste (alkoxy en C₁-C₃)carbonyle;
W représente un reste hétérocyclique divalent non substitué ou substitué du groupe des hétérocycles à cinq chaînons en partie insaturés ou aromatiques avec 1 à 3 hétéroatomes dans le cycle du type N ou O, au moins un atome d'azote et au plus un atome d'oxygène étant contenu dans le cycle, de préférence un reste du groupe (W1) à (W4), 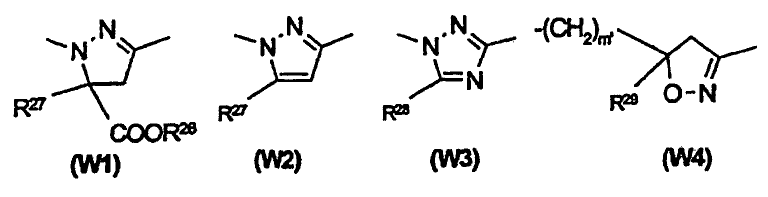
m' vaut 0 ou 1;
R¹⁷, R¹⁹ représentent, identiques ou différents, un atome d'halogène, un groupe alkyle en C₁-C₄, alkoxy en C₁-C₄, nitro ou haloalkyle en C₁-C₄,
R¹⁸, R²⁰ représentent, identiques ou différents, un groupe OR²⁴, SR²⁴ ou NR²⁴R²⁵ ou un hétérocycle de 3 à 7 chaînons saturé ou insaturé avec au moins un atome d'azote et jusqu'à 3 hétéroatomes, de préférence du groupe composé de O et S, qui est relié sur l'atome d'azote avec le groupe carbonyle dans (II) respectivement (III) et qui est non substitué ou substitué par des restes du groupe composé de alkyle en C₁-C₄, alkoxy en C₁-C₄, ou par éventuellement un groupe phényle substitué, de préférence un reste de formule OR²⁴, NHR²⁵ ou N(CH₃)₂, en particulier de formule OR²⁴;
R²⁴ représente un atome d'hydrogène ou un reste hydrocarbure aliphatique non substitué ou substitué, de préférence avec en tout de 1 à 18 atomes de carbone;
R²⁵ représente un atome d'hydrogène, un groupe alkyle en C₁-C₆, alkoxy en C₁-C₆ ou un groupe phényle substitué ou non substitué;
R²⁶ représente un atome d'hydrogène, un groupe alkyle en C₁-C₈, haloalkyle en C₁-C₈, alkoxy en C₁-C₄-alkyle en C₁-C₄, hydroxyalkyle en C₁-C₆, cycloalkyle en C₃-C₁₂ ou tri-(alkyle en C₁-C₄) -silyle;
R²⁷, R²⁸, R²⁹ représentent, identiques ou différents, un atome d'hydrogène, un groupe alkyle en C₁-C₈, haloalkyle en C₁-C₈, cycloalkyle en C₃-C₁₂ ou un groupe phényle substitué ou non substitué;
y compris les stéréoisomères et les sels employés dans l'agriculture.

2. Agent herbicide efficace selon la revendication 1, où dans le composé de formule (I)
R¹ représente un groupe alkyle en C₁-C₄, de préférence un groupe méthyle,
R² représente un groupe alkanoyle en C₂-C₇-alkyle en C₁-C₄, (alkoxy en C₁-C₆)carbonyl-alkyle en C₁-C₄, alkyle en C₁-C₄, {[( 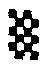 -alkylalkylidène) en C₃-C₉]iminooxy-(alkoxy en C₁-C₆)carbonyl}-alkyle en C₁-C₄, (alcényloxy en C₃-C₆) carbonyl-alkyle en C₁-C₄, (alcynyloxy en C₃-C₆)carbonyl-alkyle en C₁-C₄ ou (cycloalkyloxy en C₃-C₈)carbonyl-alkyle en C₁-C₄,
R³ représente un atome d'halogène ou un groupe cyano,
R⁴ représente un atome d'hydrogène ou de fluoré,
R⁵ représente un atome d'hydrogène, de fluore ou un groupe méthyle, et
R⁶ représente un groupe méthyle, trifluorométhyle ou pentafluoroéthyle.

3. Agent herbicide efficace selon une ou plusieurs des revendications 1 à 2, où le rapport en poids herbicide:antidote s'élève de 1:100 à 100:1.

4. Agent herbicide efficace selon une ou plusieurs des revendications 1 à 3, contenant en plus une ou plusieurs autres substances actives agrochimiques.

5. Procédé pour la lutte contre des plantes nuisibles dans des cultures de plantes **caractérisé en ce qu'**on apporte une quantité efficace herbicide d'un agent efficace herbicide selon une ou plusieurs des revendications 1 à 4, sur les plantes nuisibles, plantes de culture, semences de plantes ou sur les surfaces sur lesquelles les plantes poussent.

6. Procédé selon la revendication 5, **caractérisé en ce que** les plantes de culture proviennent du groupe composé de maïs, blé, seigle, orge, avoine, riz, sorgho, coton et soja.

7. Procédé selon la revendication 5 ou 6, **caractérisé en ce que** les plantes de culture sont des plantes transgéniques ou sont tolérantes par pression de sélection.

8. Utilisation d'un agent herbicide efficace selon une ou plusieurs des revendications 1 à 4, pour la lutte contre des plantes nuisibles dans des cultures de plantes.
